# EUROPEAN PATENT SPECIFICATION

(11) **EP 1 089 513 B1**
(45) Date of publication and mention of the grant of the patent: **25.02.2004**
(21) Application number: 99125993.8
(22) Date of filing: 28.12.1999
(51) Int. Cl.: H04L 27/26, H04N 7/24

(54) **Frequency characteristic compensator for OFDM**
Kompensator der Frequenzcharakteristik für OFDM
Compensateur de la charactéristique de fréquence pour OFDM

(30) Priority: 30.09.1999 JP 28034599
(43) Date of publication of application: 04.04.2001
(73) Proprietor: KABUSHIKI KAISHA TOSHIBA, Kawasaki-shi, Kanagawa-ken 210-8572 (JP)
(72) Inventor: Suga, Masaru, c/o Kabushiki Kaisha Toshiba, Minato-ku, Tokyo 105-8001 (JP); Isobe, Seiji, c/o Kabushiki Kaisha Toshiba, Minato-ku, Tokyo 105-8001 (JP)
(74) Representative: HOFFMANN - EITLE

(56) References cited:
- EP-A- 0 689 307
- EP-A- 0 772 310
- EP-A- 0 833 460
- EP-A- 0 869 647

## Description

The present invention relates to a frequency characteristic compensator used in a transmission system utilizing a transmission path, such as a medium wave, short wave, ground wave, satellite route and cable, and compensating the frequency characteristic in a relay device for relaying a transmitting signal with the use of an OFDM (Orthogonal Frequency Division Multiplexing) system.

In the existing analog type television broadcasting, the detection of the characteristic of a transmission path from a transmitter to a relay device is made by utilizing a specific detection signal sent during a blanking period. And such a transmission path characteristic is compensated by adjusting the frequency characteristic of an IF (intermediate frequency) filter of the relay device to a characteristic reverse to the transmission characteristic.

In Japan, the standardization of the next-generation digital terrestrial television broadcasting is now under way and the adoption of the OFDM system has been decided. In the EC countries, the digital terrestrial broadcasting using the OFDM system has been partially reduced to practice. Further, even in the cable television broadcasting, a system using an OFDM system is now under development. It is desired that as the next generation digital transmission system use be made of the OFDM system.

In the television broadcasting using the OFDM system, in an effort to achieve its standardization, a reference signal is placed on a frequency domain to presume a transmission path characteristic. In order to detect the transmission characteristic in the relay device and compensate the transmission characteristic, it is required that, through FFT (Fast Fourier Transformation) processing, the OFDM receiving signal be converted from a time domain to a frequency domain and, by doing so, a reference signal be demodulated on that frequency axis.

However, in order to effect demodulation processing by the FFT in the relay device, a greater cost burden is required and, as the relay stages are increased, the processing time exert a greater adverse influence on the whole processing time.

As set out above, in the case where an OFDM signal is relayed such that a reference signal for presuming the transmission path characteristic is placed on the frequency domain, it is necessary to provide a demodulation process by the FFT and there arise a high cost problem and signal delay problem.

The object of the present invention is to provide a frequency characteristic compensator which can solve the above-mentioned problems and ensures readier adjustment without a process of demodulation by an FFT and can adaptively compensate the transmission path characteristic varying depending upon the seasons, weather and time.

In order to achieve the above-mentioned object, according to the present invention from a first aspect there is provided a frequency characteristic compensator for OFDM (Orthogonal Frequency Division Multiplexing) which has means to compensate the frequency characteristic of an OFDM signal, and an automatic gain control section for controlling the OFDM signal to a predetermined amplitude level; and characterized by comprising a compensation processing section for compensating a tilt and ripple of a frequency characteristic of the output signal of the automatic gain control section, so as to output a compensated OFDM signal, a frequency characteristic detection section for detecting the frequency characteristic of an amplitude level in said compensated OFDM signal frequency band of an output of the compensation processing section, and a control signal generating section which, in order to make the frequency characteristic flat, is adapted to generate a gain control signal to set said predetermined amplitude level for the automatic gain control section and tilt and ripple compensation control signals for the compensation processing section on the basis of a result of detection by the frequency characteristic detection section.

According to the present invention from a second aspect there is provided a frequency characteristic compensator for OFDM (Orthogonal Frequency Division Multiplexing) which has means to compensate the frequency characteristic of an OFDM signal, characterized by comprising a first and a second compensator circuit connected in series with each other. The first compensator circuit comprises an adder for adding a compensated signal to the OFDM signal and, by doing so, eliminating disturbing components and delivering an output an auto-correlation processing section adapted for applying auto-correlation processing to the output of the adder and finding a compensation error of the frequency characteristic, and a compensation signal generating section, adapted for cumulating the compensation errors output from the auto-correlation processing section, and further adapted to determine thereby the frequency characteristic of a compensated signal, and further adapted to generate a compensated signal from said frequency characteristic and further adapted for outputting the compensated signal to the adder. The second compensator circuit comprises an automatic gain control section for controlling the OFDM signal to a predetermined amplitude level, a compensation processing section for compensating a tilt and ripple of a frequency characteristic in the output signal of the automatic gain control section so as to output a compensated OFDM signal, a frequency characteristic detection section for detecting the frequency characteristic of an amplitude level in said compensated OFDM signal frequency band of an output of the compensation processing section, and a control signal generating section which, in order to make the frequency characteristic flat, is adapted to generate a gain control signal to set said predetermined amplitude level for the automatic gain control section and tilt and ripple compensated control signals for the compensation processing section on the basis of a result of detection by the frequency characteristic detection section.

According to the present invention there is further provided a method of compensating frequency characteristics for OFDM (Orthogonal Frequency Division Multiplexing) as defined by independent claims 7 or 8.

The invention can be more fully understood from the following detailed description when taken in conjunction with the accompanying drawings, in which:
FIG. 1 is a block diagram showing an arrangement of a frequency characteristic compensator for OFDM according to an embodiment of the present invention;
FIGS. 2A and 2B are waveform diagrams, respectively, showing a tilt and ripple compensated by the first embodiment;
FIG. 3 is a circuit diagram showing an arrangement of a series-parallel resonant circuit used in tilt and ripple compensating units of the present embodiment;
FIG. 4 is a characteristic diagram showing the frequency characteristic of the series-parallel resonance circuit shown in FIG. 3;
FIG. 5 is a model diagram for explaining how to decide an AGC control value in the present embodiment;
FIGS. 6A and 6B are characteristic diagrams showing the frequency characteristics at the input and output of a linearizer used in the present embodiment; and
FIG. 7 is a block diagram showing an arrangement of a frequency characteristic compensator for OFDM according to another embodiment of the present invention.

With reference to the accompanying drawing an explanation will be made about the embodiments of the present invention.

In an embodiment of the present invention there is provided a frequency characteristic compensator for OFDM which compensates the frequency characteristic of an OFDM (Orthogonal Frequency Division Multiplexing) signal, comprising: an automatic gain control section (11) for controlling the OFDM signal to a predetermined amplitude level, a compensation processing section (12) for compensating a tilt and ripple of the frequency characteristic of an OFDM signal band with respect to an output of the automatic gain control section, a frequency characteristic detection section (14) for detecting the frequency characteristic of an amplitude level in an OFDM signal frequency band of an output of the compensation processing and a control signal generating section (15, 16) which, in order to make the frequency characteristic flat, generates a gain control signal for the automatic gain control section and tilt and ripple compensated signals for the compensation processing section (12) on'the basis of a result of detection by the frequency characteristic detection section (14).

According to the present invention there is further provided a frequency characteristic compensator for OFDM (Orthogonal Frequency Division Multiplexing) which compensates the frequency characteristic of the OFDM signal, comprising: first and second compensator units (21, 22) connected in series with each other, the first compensator unit (21) comprising an adder (211) for adding a compensated signal to the OFDM signal and, by doing so, eliminating disturbing components and delivering an output, an auto-correlation processing section (213) for applying auto-correlation processing to the output of the adder (211) and finding a compensation error of the frequency characteristic, and a compensated signal generating section (212) for cumulating the compensation errors output from the auto-correlation processing section (213), thereby determining the frequency characteristic of a compensated signal, for generating a compensated signal from the frequency characteristic thus determined, and for outputting the compensated signal to the adder (211), and the second compensator unit (22) comprising an automatic gain control section (11) for controlling the OFDM signal to a predetermined amplitude level, a compensation processing section (12) for compensating a tilt and ripple of a frequency characteristic of an OFDM signal band with respect to the output of the automatic gain control section (11), a frequency characteristic detection section (14) for detecting the frequency characteristic of an amplitude level in an OFDM signal band of an output of the compensation processing section (12), and a control signal generating section (15, 16) which, in order to make the frequency characteristic flat, generates a gain control signal for the automatic gain control section' (11) and tilt and ripple compensated control signals for the compensation processing section (12) on the basis of a result of detection by the frequency characteristic detection section (14).

This summary of the invention does not necessarily describe all necessary features so that the invention may also be a sub-combination of these described features.

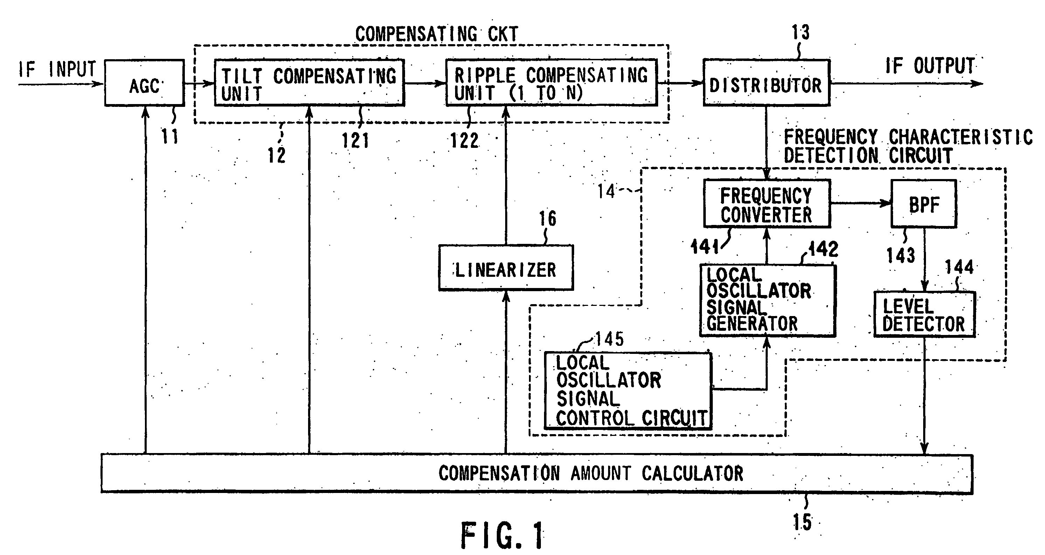

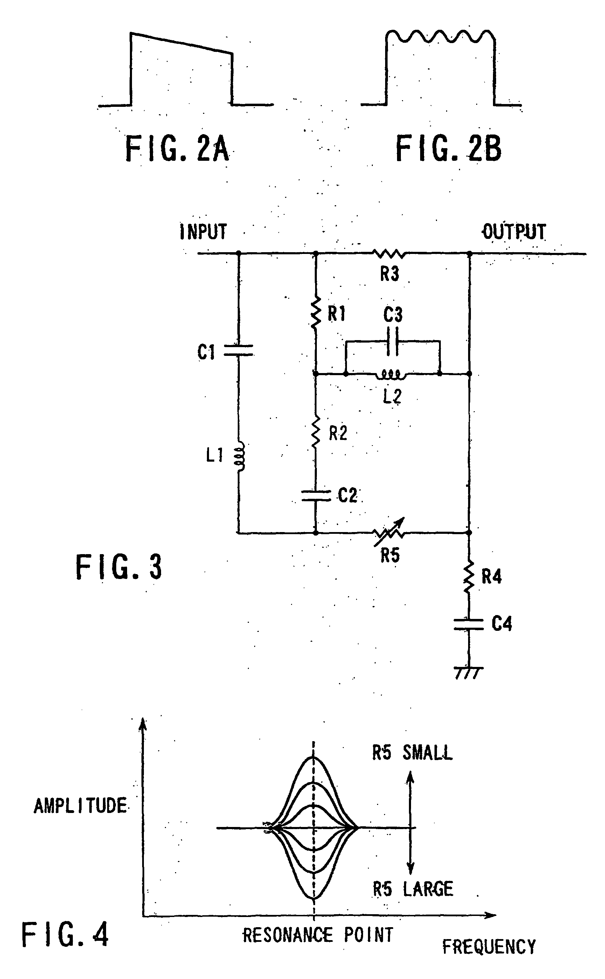

FIG. 1 shows an arrangement of a frequency characteristic compensator for OFDM according to an embodiment of the present invention which is used in a receiving section's IF stage in a relay device for OFDM broadcasting. The OFOM signal at the IF stage is supplied to a compensating circuit 12 held by an AGC (automatic gain control) circuit 11 in a predetermined amplitude level. This compensating circuit 12 includes a tilt compensating unit 121 for compensating the tilt of a frequency characteristic in a band as shown in FIG. 2A and a ripple compensating unit 122 for compensating a ripple in a band as shown in FIG. 2B, noting that these compensating units 121 and 122 are integrally structured by connecting series-parallel resonance circuits in a multi-stage configuration as shown, for example, in FIG. 3 and properly setting their Q.

Now an explanation will be made about the series-parallel resonance circuit shown in FIG. 3. In FIG. 3, an input terminal is connected to ground through a capacitor C1, coil L1, variable resistor R5, resistor R4 and capacitor C4 and to an output terminal through a resistor R3. The output terminal is connected to a connection point between the variable resistor R5 and the resistor R4. Further, a series circuit of the capacitor C1 and coil L1 is connected in parallel with a series circuit of a resistor R1, resistor R2 and capacitor C2 and a parallel circuit of a capacitor C3 and coil L2 is connected between a connection point of the resistors R1 and R2 and the output terminal.

In this case, when the variable resistance (R5) approaches 0Ω, a series resonance acts due to the presence of the capacitor C1 and coil L1, so that the amplitude frequency characteristic is raised with a resonance frequency. If, on the other hand, the variable resistance (R5) goes near to infinity (∞), a parallel resonance acts due to the presence of the capacitor C3 and coil L2, so that, the amplitude frequency characteristic is lowered with the resonance frequency. As evident from this, the amplitude level can be raised and lowered with the resonance frequency as shown in FIG. 4 and this is done by making the variable resistance (R5) variable. If an N number of such series-parallel resonance circuits are prepared and connected together in a series configuration and the resonance frequencies of the individual circuits are matched to N division frequencies in the OFDM band, it is possible to make the tilt and ripple of the frequency characteristic variable.

The output of the compensating circuit 12 is output as an IF signal and it is also distributed by a distributor to a frequency characteristic detection circuit 14. In this frequency characteristic detection circuit 14, the IF signal from the distributor 13 and a local signal from a local signal generator 142 are mixed by a frequency converter 141 and converted to a base band signal and, after out of the converted signal a requisite bandpass signal alone is extracted by a bandpass filter (BPF) 143, and its signal level is detected by a level detector 144. Here, the local signal frequency of the local signal generator 142 is swept in an OFDM signal band by a local signal control circuit 145 and, by doing so, it is possible to obtain the frequency characteristic in the OFDM signal band.

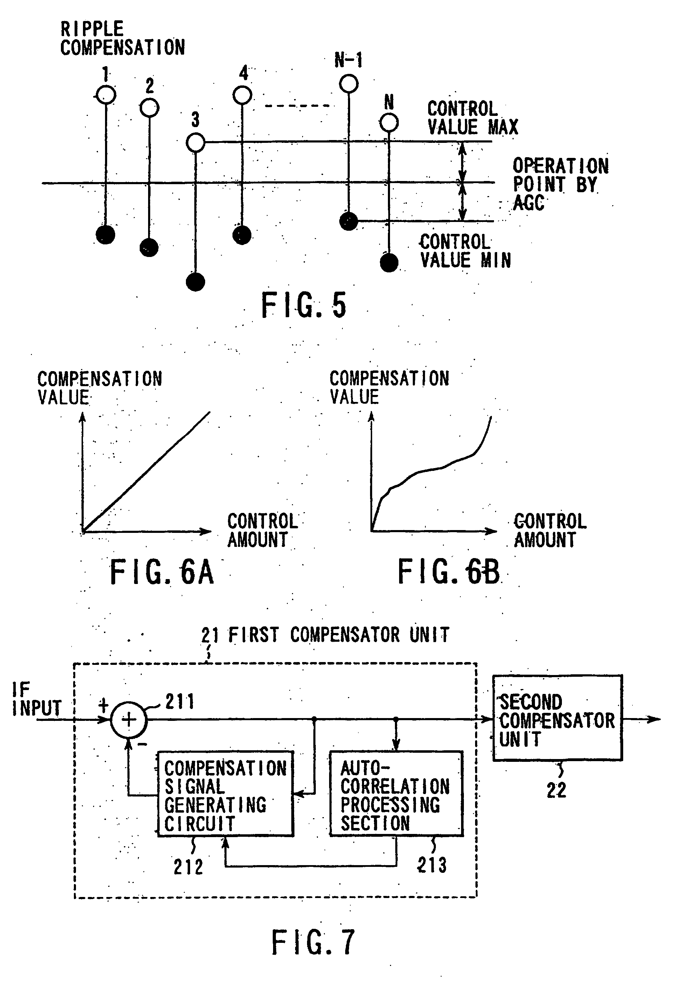

The signal level value obtained by the frequency characteristic detection circuit 14 is supplied to a compensation amount calculator 15. The compensation amount calculator 15 calculates an AGC control amount, tilt compensation amount and ripple compensation amount corresponding to the AGC circuit 11, tilt compensating unit 121 and ripple compensating unit 122 in accordance with the amplitude levels of the respective frequency components and output respective control signals. At this time, with respect to the AGC control value, as shown in FIG. 5, in order to enable the margin values of a maximum value (control value MAX) and minimum value (control value MIN) of control values (an N number of them in total) for the ripple compensation to be equally distributed, that is, to enable control to be done over the whole frequency band, decision is made by finding average values, etc.

Here, it is not possible to make better control unless, in the ripple compensating unit 122, a relation between the ripple control value and the control amount is linearly varied. For this reason, a linearizer 16 is interposed between the compensating amount calculator 15 and the ripple compensation unit 122. The linearizer 16 has a reverse characteristic to the nonlinear characteristic of the ripple compensating unit 122 and converts a control signal having the linear characteristic as shown in FIG. 6A to a characteristic as shown in FIG. 6B and delivers a corresponding output to the ripple compensating unit 122. By doing so it is possible to compensate the nonlinear characteristic of the ripple compensating unit 122.

The frequency characteristic compensator arranged in view of the fact that the signal spectrum of an OFDM signal is flat in a transmit band is characterized in that, on the condition that the amplitude is constant in the transmit frequency band, the frequency characteristic of the transmission path and apparatus is detected. That is, since the OFDM signal should be originally flat in its frequency band, if this frequency characteristic is evaluated, it is possible to decide at which frequency the ripple occurs or where the frequency region is attenuated.

In the above-mentioned arrangement, the amplitude level of the OFDM signal frequency band is found by the frequency characteristic detection circuit 14 and a frequency drooped due to the presence of the ripple or a frequency region attenuated in amplitude level is found by the compensation amount calculator 15. By doing so it is possible to control a compensating unit in the compensating circuit 12 which corresponds to the associated frequency. By this control, the frequency characteristic of the output OFDM signal is such that the disturbance of the frequency characteristic by the transmission path characteristic is compensated and an output is delivered in a "flat" state.

According to the frequency characteristic compensator thus arranged, the transmission path characteristic varying dependent upon the seasons, weather and time involved can be properly compensated without a process of demodulation by the FFT. Further, the amount of compensation can be calculated automatically and it is easier to perform an adjusting operation of a relay device. Since the frequency characteristic of the output section is found, it is possible to compensate the frequency characteristic of the device.

Here, if the drooping frequency or the frequency region drooped in amplitude level is raised by the compensator thus arranged, the noise component is also increased. In a receiving device, however, a receive gain can be earned in comparison with the case where replaying is made without any compensation and there occurs no practical problem so long as the SN ratio does not exceed any allowable value.

In the case.where there are many relay stages, a compensator by the FFT processing is used in an intervening relay device and, before the SN ratio exceeds an allowable value, a transmitting signal is reconstructed, thereby eliminating a noise component. It is, therefore, possible to utilize the above-mentioned compensator in a downstream relay device.

Although, in the above-mentioned embodiment, the compensator has been explained as being applied to a receive section's IF stage of the relay device, the present compensator is not restricted thereto and can be applied to various situations, such as applying to an RF stage.

Incidentally, in the relay device, there arises a problem that a transmitting wave is received around back to a receiving antenna and imparts an adverse influence to a receiving signal as a multipath reception. And a compensator of a type as will be set out below has been developed so as to cancel such an echo-back. This compensator detects the frequency characteristic of the transmission path through the utilization of an auto-correlation and, by applying a convolution process to a received signal on the basis of this detection characteristic, a disturbing component due to the multipath reception is eliminated.

Here, where, in the compensator using the auto-correlation, a time difference between a desired wave and a disturbing wave is relatively long, a correlation peak prominently emerges and it is possible to achieve high accuracy compensation. From the property of the auto-correlation, however, a time determined by a reciprocal of a frequency band of a transmitting signal provides a correlation detection limitation and, where the disturbing wave approximates to the desired wave, it is not possible to separate the disturbing component. In the compensator as explained in connection with the above-mentioned embodiment, however, the frequency characteristic is found by the frequency sweeping of the local signal and, in the case where there occurs any proximity multipass reception, its frequency characteristic emerges as a tilt and it is easier to achieve a multipass compensation. From this viewpoint, both the compensating units are combined together and, by utilizing the respective characteristics, it is possible to eventually improve the compensation characteristic.

FIG. 7 shows an arrangement of a frequency characteristic compensator using the above-mentioned combination. Reference numeral 21 shows a first compensator unit utilizing the auto-correlation and 22 shows a second compensator unit as shown in FIG. 1. These compensator units 21 and 22 are connected in series with each other. The order of their connection is optional.

The first compensator unit 21 receives an OFDM signal of a receive IF stage and a compensation signal from a compensation signal generation section 212 is added by an adder 211 to the IF signal and an output signal of the adder 211 is input to the compensation signal generation section 212 and to an auto-correlation processing section 213. The auto-correlation processing section 213 performs auto-correlation of the input signal, thereby determining the difference between the frequency characteristic of a transmission path and the frequency characteristic of a compensated signal. This difference is output, in the form of a compensation error signal, to the compensation signal generating section 212. The compensation signal generating section 212 is comprised of an FIR (Finite Impulse Response) filter and generates a compensated signal by cumulatively adding the compensation error signal from the auto-correlation processing section 213 to the input signal. By adding this compensated signal to the transmitting signal it is possible to compensate the frequency characteristic on the transmission path.

The output of the first compensator unit 21 is supplied to the second compensator unit 22. The second compensator unit 22 is comprised of a counterpart as shown in FIG. 1 and its inner arrangement and processing operation are omitted.

As set out above, for the first compensator unit 21 it is possible to highly accurately separate the "echo-back" of a transmitting wave and disturbing components resulting from a multipath reception from the received signal. It is not possible, however, to handle a proximity multipath reception. In this embodiment, however, the second compensator unit 22 effectively functions against the proximity multipath reception. By combining together both the compensator units 21 and 22 it is possible to obtain a "flat" frequency characteristic of the OFDM signal while suppressing not only the proximity multipath reception but also the disturbing components.

According to the present invention, a frequency characteristic compensator for OFDM can be provided which ensures a readier adjustment without using a process of demodulation by the FFT and can adaptively compensate the transmission path characteristic varying dependent upon the seasons, weather and time involved.

## Claims

1. A frequency characteristic compensator for OFDM Orthogonal Frequency Division Multiplexing which has means to compensate the frequency characteristic of an OFDM signal; and,
an automatic gain control section (11) for controlling the OFDM signal to a predetermined amplitude level; and **characterized by** comprising
a compensation processing section (12) for compensating a tilt and ripple of a frequency characteristic of the output signal of the automatic gain control section (11), so as to output a compensated OFDM signal;
a frequency characteristic detection section (14) for detecting the frequency characteristic of an amplitude level in said compensated OFDM signal frequency band of an output of the compensation processing section (12); and
a control signal generating section (15, 16) which, in order to make the frequency characteristic flat, is adapted to generate a gain control signal to set said predetermined amplitude level for the automatic gain control section (11) and tilt and ripple compensation control signals for the compensation processing section (12) on the basis of a result of detection by the frequency characteristic detection section (14).

2. A frequency characteristic compensator for OFDM Orthogonal Frequency Division Multiplexing which has means to compensate the frequency characteristic of an OFDM signal, **characterized by** comprising:
first and second compensator circuit (21, 22) connected in series with each other,
the first compensator circuit (21) comprising an adder (211) for adding a compensated signal to the OFDM signal and, by doing so, eliminating disturbing components and delivering an output an auto-correlation processing section (213) adapted for applying auto-correlation processing to the output of the adder (211) and finding a compensation error of the frequency characteristic, and a compensation signal generating section, (212) adapted for cumulating the compensation errors output from the auto-correlation processing section (213), and further adapted to determine thereby the frequency characteristic of a compensated signal, and further adapted to generate a compensated signal from said frequency characteristic and further adapted for outputting the compensated signal to the adder (211), and
the second compensator circuit (22) comprising an automatic gain control section (11) for controlling the OFDM signal to a predetermined amplitude level, a compensation processing section (12) for compensating a tilt and ripple of a frequency characteristic in the output signal of the automatic gain control section so as to output a compensated OFDM signal, a frequency characteristic detection section (14) for detecting the frequency characteristic of an amplitude level in said compensated OFDM signal frequency band of an output of the compensation processing section (12), and a control signal generating section (15, 16) which, in order to make the frequency characteristic flat, is adapted to generate a gain control signal to set said predetermined amplitude level for the automatic gain control section (11) and tilt and ripple compensated control signals for the compensation processing section (12) on the basis of a result of detection by the frequency characteristic detection section (14).

3. A frequency characteristic compensator according to Claim 1 or 2, **characterized in that** the compensation processing section (12) has a plurality of series-parallel resonance circuits connected in a multi-stage configuration adapted such the each one of a plurality of divided OFDM signal bands is allocated to a corresponding series-parallel resonance circuit and said compensation processing section further being adapted to enable the corresponding series-parallel resonance circuit to act in a series resonance/parallel resonance relation to increase and decrease the amplitude level of the allocated frequency band in accordance with tilt and ripple compensation control signals from the control signal generating section (15, 16).

4. A frequency characteristic compensator according to claim 1 or 2, **characterized in that** the control signal generation section (15, 16) includes a linearizer (16) which is adapted to impart a characteristic reverse to that of the ripple compensation characteristic to the ripple compensated control signal when the ripple compensation characteristic of the compensation processing section (12) is not linear.

5. A frequency characteristic compensator according to claim 1 or 2, **characterized in that** the frequency characteristic detection section (14) includes a local oscillator signal generator (142), means (141) for frequency converting an output of the compensation processing section (12) on the basis of a local oscillator signal output from the generator (142), means (143) for effecting extraction of a signal with a predetermined frequency width from the frequency converted output, and means (144) for effecting amplitude level detection of the extracted signal, and wherein the frequency characteristic detection section (14) further includes means (145) for sweeping the frequency of the local oscillator signal whereby to detect the frequency characteristic of the amplitude level in the OFDM signal frequency band.

6. A frequency characteristic compensator according to claim 1 or 2, **characterized in that** the compensator is used for re-transmission of an OFDM broadcasting signal at a relay device for OFDM broadcasting.

7. A method of compensating frequency characteristics for OFDM Orthogonal Frequency Division Multiplexing comprising the steps of:
automatic gain controlling (11), by controlling an OFDM signal to a predetermined amplitude level;
compensating a tilt and ripple of a frequency characteristic of the output signal of the automatic gain controlling (11), so as to output a compensated OFDM signal;
detecting the frequency characteristic of an amplitude level in said compensated OFDM signal frequency band of said compensated OFDM signal;
generating a gain control signal to set said predetermined amplitude level for use in said step of controlling the OFDM signal to a predetermined amplitude level, on the basis of the results of said step of detecting the frequency characteristic; and
generating tilt and ripple compensation control signals for use in said step of compensating the tilt and ripple, on the basis of the results of said step of detecting the frequency characteristic.

8. A method of compensating frequency characteristics for OFDM Orthogonal Frequency Division Multiplexing comprising:
a first compensation process (21) with the steps of adding a compensated signal to an OFDM signal at an adder (211)
applying auto-correlation processing to the output of the step of adding (211) and finding a compensation error of the frequency characteristic,
cumulating the compensation errors output from the auto-correlation processing (213), and
determining thereby the frequency characteristic of a compensated signal,
generating a compensated signal from said frequency characteristic and outputting the compensated signal to the step of adding (211); and
a second compensation process (22) with the steps of automatic gain controlling (11) by controlling the output of the step of adding to a predetermined amplitude level,
compensating a tilt and ripple of a frequency characteristic of the output signal of the automatic gain control section (11), so as to output a compensated OFDM signal;
detecting the frequency characteristic of an amplitude level in said compensated OFDM signal frequency band of said compensated OFDM signal;
generating a gain control signal to set said predetermined amplitude level for use in said step of automatic gain controlling, on the basis of the results of said step of detecting the frequency characteristic; and
generating tilt and ripple compensation control signals for use in said step of compensating the tilt and ripple, on the basis of the results of said step of detecting the frequency characteristic.

9. The method of compensating frequency characteristics according to claim 7 or claim 8, wherein the frequency characteristic detecting step comprises the steps of:
frequency converting the compensated OFDM signal on the basis of a local oscillator signal;
effecting extraction of a signal with a predetermined frequency width from the frequency converted signal;
effecting amplitude level detection of the extracted signal; and
sweeping the frequency of the local oscillator signal whereby to detect the frequency characteristic of the amplitude level in the OFDM signal frequency band.

## Patentansprüche

1. Frequenzcharakteristik-Kompensator für OFDM, orthogonales Frequenzteilungs-Multiplexieren, der eine Einrichtung zum Kompensieren der Frequenzcharakteristik eines OFDM-Signals; und
einen automatischen Verstärkungssteuerabschnitt (11) zum Steuern des OFDM-Signals auf einen vorbestimmten Amplitudenpegel aufweist; und **dadurch gekennzeichnet ist, dass** er umfasst:
einen Kompensationsverarbeitungsabschnitt (12) zum Kompensieren einer Neigung und Welligkeit einer Frequenzcharakteristik des Ausgangssignals des automatischen Verstärkungssteuerabschnitts (11), um so ein kompensiertes OFDM-Signal auszugeben;
einen Frequenzcharakteristik-Erfassungsabschnitt (14) zum Erfassen der Frequenzcharakteristik eines Amplitudenpegels in dem kompensierten OFDM-Signalfrequenzband eines Ausgangs des Kompensationsverarbeitungsabschnitts (12); und
einen Steuersignal-Erzeugungsabschnitt (15, 16), der, um die Frequenzcharakteristik flach auszuführen, ausgelegt ist, ein Verstärkungssteuersignal, um den vorbestimmten Amplitudenpegel für den automatischen Verstärkungssteuerabschnitt (11) einzustellen, und Neigungs- und Welligkeits-Kompensationssteuersignale für den Kompensationsverarbeitungsabschnitt (12) auf der Grundlage eines Ergebnisses einer Erfassung durch den Frequenzcharakteristik-Erfassungsabschnitt (14) zu erzeugen.

2. Frequenzcharakteristik-Kompensator für OFDM-Orthogonales Frequenzteilungs-Multiplexieren, der eine Einrichtung aufweist, um die Frequenzcharakteristik eines OFDM-Signals zu kompensieren, **dadurch gekennzeichnet, dass** er umfasst:
eine erste und eine zweite Kompensatorschaltung (21, 22), die in Reihe zueinander verbunden sind,
wobei die erste Kompensatorschaltung (21) einen Addierer (211) zum Addieren eines kompensierten Signals zu dem OFDM-Signal, und, indem so verfahren wird, zum Eliminieren von Störkomponenten und zum Liefern eines Ausgangs eines Autokorrelations-Verarbeitungsabschnitts (213), der zum Anwenden einer Autokorrelationsverarbeitung auf den Ausgang des Addierers (211) ausgelegt ist, und zum Finden eines Kompensationsfehlers der Frequenzcharakteristik, und einen Kompensationssignal-Erzeugungsabschnitt (212), der zum Kumulieren der Kompensationsfehler, die von dem Autokorrelations-Verarbeitungsabschnitt (213) ausgegeben werden, ausgelegt ist, und weiter ausgelegt ist, dadurch die Frequenzcharakteristik eines Kompensationssignals zu bestimmen, und weiter ausgelegt ist, ein kompensiertes Signal aus der Frequenzcharakteristik zu bestimmen, und weiter ausgelegt ist, das kompensierte Signal zu dem Addierer (211) auszugeben, umfasst, und
wobei die zweite Kompensatorschaltung (22) einen automatischen Verstärkungssteuerabschnitt (11) zum Steuern des OFDM-Signals auf einen vorbestimmten Amplitudenpegel, einen Kompensationsverarbeitungsabschnitt (12) zum Kompensieren einer Neigung und Welligkeit einer Frequenzcharakteristik in dem Ausgangssignal des automatischen Verstärkungssteuerabschnitts, um so ein kompensiertes OFDM-Signal auszugeben, einen Frequenzcharakteristik-Erfassungsabschnitt (14) zum Erfassen der Frequenzcharakteristik eines Amplitudenpegels in dem kompensierten OFDM-Signalfrequenzband eines Ausgangs des Kompensationsverarbeitungsabschnitts (12) und einen Steuersignal-Erzeugungsabschnitt (15, 16), der, um die Frequenzcharakteristik flach auszuführen, ausgelegt ist, ein Verstärkungssteuersignal zu erzeugen, um den vorbestimmten Amplitudenpegel für den automatischen Verstärkungssteuerabschnitt (11) und Neigungs- und Welligkeits-kompensierte Steuersignale für den Kompensationsverarbeitungsabschnitt (12) auf der Grundlage eines Ergebnisses einer Erfassung durch den Frequenzcharakteristik-Erfassungsabschnitt (14) zu erzeugen, umfasst.

3. Frequenzcharakteristik-Kompensator nach Anspruch 1 oder 2, **dadurch gekennzeichnet, dass** der Kompensationsverarbeitungsabschnitt (12) eine Mehrzahl von Reihen-Parallelresonanzschaltungen aufweist, die in einer Mehrfachstufenkonfiguration verbunden sind, die derart ausgelegt ist, dass jedes einer Mehrzahl von geteilten OFDM-Signalbändern einer entsprechenden Reihen-Parallelresonanzschaltung zugeordnet ist, und der Kompensationsverarbeitungsabschnitt weiter ausgelegt ist, es zu ermöglichen, dass die entsprechende Reihen-Parallelresonanzschaltung in einer Reihenresonanz-/Parallelresonanz-Beziehung wirkt, um den Amplitudenpegel des zugeordneten Frequenzbands in Übereinstimmung mit Neigungs- und Welligkeits-Kompensationssteuersignalen von dem Steuersignal-Erzeugungsabschnitt (15, 16) zu erhöhen und zu verringern.

4. Frequenzcharakteristik-Kompensator nach Anspruch 1 oder 2, **dadurch gekennzeichnet, dass** der Steuersignal-Erzeugungsabschnitt (15, 16) einen Linearisierer (16) einschließt, der ausgelegt ist, eine Charakteristik umgekehrt zu jener der Welligkeitskompensationscharakteristik auf das Welligkeits-kompensierte Steuersignal zu übertragen, wenn die Welligkeitskompensationscharakteristik des Kompensationsverarbeitungsabschnitts (12) nicht linear ist.

5. Frequenzcharakteristik-Kompensator nach Anspruch 1 oder 2, **dadurch gekennzeichnet, dass** der Frequenzcharakteristik-Erfassungsabschnitt (14) einen Lokaloszillator-Signalgenerator (142), eine Einrichtung (141) zum Frequenzkonvertieren eines Ausgangs des Kompensationsverarbeitungsabschnitts (12) auf der Grundlage eines Lokaloszillatorsignals, das aus dem Generator (142) ausgegeben wird, eine Einrichtung (143) zum Bewirken einer Extraktion eines Signals mit einer vorbestimmten Frequenzbreite aus dem frequenzkonvertierten Ausgang, und eine Einrichtung (144) zum Bewirken einer Amplitudenpegelerfassung des extrahierten Signals einschließt, und wobei der Frequenzcharakteristik-Erfassungsabschnitt (14) weiter eine Einrichtung (145) einschließt, um die Frequenz des Lokaloszillatorsignals zu wobbeln, um dadurch die Frequenzcharakteristik des Amplitudenpegels in dem OFDM-Signalfrequenzband zu erfassen.

6. Frequenzcharakteristik-Kompensator nach Anspruch 1 oder 2, **dadurch gekennzeichnet, dass** der Kompensator für eine Rückübertragung eines OFDM-Sendesignals an einer Relaisvorrichtung zur OFDM-Sendung verwendet wird.

7. Verfahren zum Kompensieren von Frequenzcharakteristika für OFDM, orthogonales Frequenzteilungs-Multiplexieren, umfassend die Schritte:
automatisches Verstärkungssteuern (11) durch Steuern eines OFDM-Signals auf einen vorbestimmten Amplitudenpegel;
Kompensieren einer Neigung und einer Welligkeit einer Frequenzcharakteristik des Ausgangssignals des automatischen Verstärkungssteuerns (11), um so ein kompensiertes OFDM-Signal auszugeben;
Erfassen der Frequenzcharakteristik eines Amplitudenpegels in dem kompensierten OFDM-Signalfrequenzband des kompensierten OFDM-Signals;
Erzeugen eines Verstärkungssteuersignals, um den vorbestimmten Amplitudenpegel zur Verwendung in dem Schritt eines Steuerns des OFDM-Signals auf einen vorbestimmten Amplitudenpegel auf der Grundlage der Ergebnisse des Schritts eines Erfassens der Frequenzcharakteristik einzustellen; und
Erzeugen von Neigungs- und Kompensationssteuersignalen zur Verwendung in dem Schritt eines Kompensierens der Neigung und Welligkeit auf der Grundlage der Ergebnisse des Schritts eines Erfassens der Frequenzcharakteristik.

8. Verfahren zum Kompensieren von Frequenzcharakteristika für OFDM, orthogonales Frequenzteilungs-Multiplexieren, umfassend:
einen ersten Kompensationsprozess (21) mit den Schritten eines Addierens eines kompensierten Signals zu einem OFDM-Signal in einem Addierer (211);
Anwenden einer Autokorrelationsverarbeitung auf den Ausgang des Schritts eines Addierens (211) und Finden eines Kompensationsfehlers der Frequenzcharakteristik;
Kumulieren der Kompensationsfehler, die aus der Autokorrelationsverarbeitung (213) ausgegeben werden, und
Bestimmen der Frequenzcharakteristik eines kompensierten Signals dadurch;
Erzeugen eines kompensierten Signals aus der Frequenzcharakteristik und Ausgeben des kompensierten Signals zu dem Schritt eines Addierens (211); und
einen zweiten Kompensationsprozess (22) mit den Schritten eines automatischen Verstärkungssteuerns (11) durch ein Steuern des Ausgangs des Schritts eines Addierens auf einen vorbestimmten Amplitudenpegel;
Kompensieren einer Neigung und Welligkeit einer Frequenzcharakteristik des Ausgangssignals des automatischen Verstärkungssteuerabschnitts (11), um so ein kompensiertes OFDM-Signal auszugeben;
Erfassen der Frequenzcharakteristik eines Amplitudenpegels in dem kompensierten OFDM-Signalfrequenzband des kompensierten OFDM-Signals;
Erzeugen eines Verstärkungssteuersignals, um den vorbestimmten Amplitudenpegel zur Verwendung in dem Schritt eines automatischen Verstärkungssteuerns auf der Grundlage der Ergebnise des Schritts eines Erfassens der Frequenzcharakteristik einzustellen; und
Erzeugen von Neigungs- und Welligkeitskompensationssteuersignalen zur Verwendung in dem Schritt eines Kompensierens der Neigung und Welligkeit auf der Grundlage der Ergebnisse des Schritts eines Erfassens der Frequenzcharakteristik.

9. Verfahren zum Kompensieren von Frequenzcharakteristika nach Anspruch 7 oder Anspruch 8, wobei der Frequenzcharakteristik-Erfassungsschritt die Schritte umfasst:
Frequenzkonvertieren des kompensierten OFDM-Signals auf der Grundlage eines Lokaloszillatorsignals;
Bewirken einer Extraktion eines Signals mit einer vorbestimmten Frequenzbreite aus dem frequenzkonvertierten Signal;
Bewirken einer Amplitudenpegelerfassung des extrahierten Signals; und
Wobbeln der Frequenz des Lokaloszillatorsignals, um dadurch die Frequenzcharakteristik des Amplitudenpegels in dem OFDM-Signalfrequenzband zu erfassen.

## Revendications

1. Compensateur de caractéristique de fréquence pour l'OFDM Orthogonal Frequency Division Multiplexing - multiplexage de division de fréquence orthogonale qui possède un moyen pour compenser la caractéristique de fréquence d'un signal OFDM ; et
une section de commande de gain automatique (11) pour commander le signal OFDM à un niveau d'amplitude prédéterminé ; et **caractérisé en ce qu'**il comprend :
une section de traitement de compensation (12) pour compenser une inclinaison et une ondulation d'une caractéristique de fréquence du signal de sortie de la section de commande de gain automatique (11), afin de fournir un signal OFDM compensé ;
une section de détection de caractéristique de fréquence (14) pour détecter la caractéristique de fréquence d'un niveau d'amplitude dans ladite bande de fréquence du signal OFDM compensé d'une sortie de la section de traitement de compensation (12) ; et
une section de génération de signal de commandé (15, 16) qui, afin de rendre la caractéristique de fréquence plate, est adaptée pour générer un signal de commande de gain pour régler ledit niveau d'amplitude prédéterminé pour la section de commande de gain automatique (11) et des signaux de commande de compensation d'inclinaison et d'ondulation pour la section de traitement de compensation (12) sur la base d'un résultat de détection par la section de détection de caractéristique de fréquence (14).

2. Compensateur de caractéristique de fréquence pour l'OFDM Orthogonal Frequency Division Multiplexing - Multiplexage de division de fréquence orthogonale qui possède un moyen pour compenser la caractéristique de fréquence d'un signal OFDM, **caractérisé en ce qu'**il comprend :
un premier et un second circuits compensateurs (21, 22) montés en série l'un avec l'autre,
le premier circuit compensateur (21) comprenant un additionneur (211) pour ajouter un signal compensé au signal OFDM et, en faisant ceci, éliminer des composants de perturbation et fournir une sortie d'une section de traitement d'autocorrélation (213) adaptée pour appliquer un traitement d'autocorrélation à la sortie de l'additionneur (211) et trouver une erreur de compensation de la caractéristique de fréquence, et une section de génération de signal de compensation (212) adaptée pour cumuler les erreurs de compensation fournies par la section de traitement d'autocorrélation (213), et adaptée en outre pour déterminer ainsi la caractéristique de fréquence d'un signal compensé, et adaptée en outre pour générer un signal compensé à partir de ladite caractéristique de fréquence et adaptée en outre pour fournir le signal compensé à l'additionneur (211), et
le second circuit compensateur (22) comprenant une section de commande de gain automatique (11) pour commander le signal OFDM à un niveau d'amplitude prédéterminé, une section de traitement de compensation (12) pour compenser une inclinaison et une ondulation d'une caractéristique de fréquence dans le signal de sortie de la section de commande de gain automatique afin de fournir un signal OFDM compensé, une section de détection de caractéristique de fréquence (14) pour détecter la caractéristique de fréquence d'un niveau d'amplitude dans ladite bande de fréquence de signal OFDM compensé d'une sortie de la section de traitement de compensation (12), et une section de génération de signal de commande (15, 16) qui, afin de rendre la caractéristique de fréquence plate, est adaptée pour générer un signal de commande de gain pour régler ledit niveau d'amplitude prédéterminé pour la section de commande de gain automatique (11) et les signaux de commande d'inclinaison et d'ondulation compensés pour la section de traitement de compensation (12) sur la base d'un résultat de détection par la section de détection de caractéristique de fréquence (14).

3. Compensateur de caractéristique de fréquence selon la revendication 1 ou 2, **caractérisé en ce que** la section de traitement de compensation (12) possède une pluralité de circuits de résonance en série parallèle raccordés dans une configuration d'étages multiples adaptée de telle sorte que chacune d'une pluralité de bandes de signal OFDM divisées est allouée à un circuit de résonance en série parallèle correspondant et ladite section de traitement de compensation étant en outre adaptée pour permettre aux circuits de résonance en série parallèle correspondants d'agir dans une relation de résonance en série/résonance parallèle pour augmenter et diminuer le niveau d'amplitude de la bande de fréquence allouée selon des signaux de commande de compensation d'inclinaison et d'ondulation à partir de la section de génération de signal de commande (15, 16).

4. Compensateur de caractéristique de fréquence selon la revendication 1 ou 2, **caractérisé en ce que** la section de génération de signal de commande (15, 16) comprend un dispositif de linéarisation (16) qui est adapté pour communiquer une caractéristique inverse de celle de la caractéristique de compensation d'ondulation pour le signal de commande d'ondulation compensé lorsque la caractéristique de compensation d'ondulation de la section de traitement de compensation (12) n'est pas linéaire.

5. Compensateur de caractéristique de fréquence selon la revendication 1 ou 2, **caractérisé en ce que** la section de détection de caractéristique de fréquence (14) comprend un générateur de signal d'oscillateur local (142), un moyen (141) pour convertir en fréquence une sortie de la section de traitement de compensation (12) sur la base d'un signal d'oscillateur local fourni par le générateur (142), un moyen (143), pour effectuer l'extraction d'un signal avec une largeur de fréquence prédéterminée à partir de la sortie convertie en fréquence, et un moyen (144) pour effectuer la détection du niveau d'amplitude du signal extrait et où la section de détection de caractéristique de fréquence (14) comprend en outre un moyen (145) pour balayer la fréquence du signal d'oscillateur local afin de détecter la caractéristique de fréquence du niveau d'amplitude dans la bande de fréquence du signal OFDM.

6. Compensateur de caractéristique de fréquence selon la revendication 1 ou 2, **caractérisé en ce que** le compensateur est utilisé pour la ré-émission d'un signal de diffusion OFDM sur un dispositif de relais pour une diffusion OFDM.

7. Procédé de caractéristiques de fréquence de compensation pour l'OFDM Orthogonal Frequency Division Multiplexing comprenant les étapes de :
commande de gain automatique (11), en commandant un signal OFDM à un niveau d'amplitude prédéterminé ;
compensation d'une inclinaison et d'une ondulation d'une caractéristique de fréquence du signal de sortie de la commande de gain automatique (11), afin de fournir un signal OFDM compensé ;
détection de la caractéristique de fréquence d'un niveau d'amplitude dans ladite bande de fréquence de signal OFDM compensé dudit signal OFDM compensé ;
génération d'un signal de commande de gain pour régler ledit niveau d'amplitude prédéterminé pour l'utilisation dans ladite étape de commande du signal OFDM à un niveau d'amplitude prédéterminé, sur la base des résultats de ladite étape de détection de la caractéristique de fréquence ; et
génération de signaux de commande de compensation d'inclinaison et d'ondulation destinés à être utilisés dans ladite étape de compensation de l'inclinaison et de l'ondulation, sur la base des résultats de ladite étape de détection de la caractéristique de fréquence.

8. Procédé de caractéristiques de fréquence de compensation pour l'OFDM Orthogonal Frequency Division Multiplexing - Multiplexage de division de fréquence orthogonale comprenant :
un premier traitement de compensation (21) avec les étapes d'addition d'un signal compensé à un signal OFDM sur un additionneur (211),
application d'un traitement d'autocorrélation sur la sortie de l'étape d'addition (211) et découverte d'une erreur de compensation de la caractéristique de fréquence,
cumul des erreurs de compensation fournies par le traitement d'autocorrélation (213), et
détermination ainsi de la caractéristique de fréquence d'un signal compensé,
génération d'un signal compensé à partir de ladite caractéristique de fréquence et fourniture du signal compensé à l'étape d'addition (211) ; et
un second traitement de compensation (22), avec les étapes de commande de gain automatique (11) en commandant la sortie de l'étape d'addition à un niveau d' amplitude prédéterminé,
compensation d'une inclinaison et d'une ondulation d'une caractéristique de fréquence du signal de sortie de la section de commande de gain (11), afin de fournir un signal OFDM compensé ;
détection de la caractéristique de fréquence d'un signal d'amplitude dans ladite bande de fréquence de signal OFDM compensé dudit signal OFDM compensé ;
génération d'un signal de commande de gain pour régler ledit niveau d'amplitude prédéterminé pour une utilisation dans ladite étape de commande de gain automatique, sur la base des résultats de ladite étape de détection de la caractéristique de fréquence ; et
génération de signaux de commande de compensation d'inclinaison et d'ondulation destinés à être utilisés dans ladite étape de compensation d'inclinaison et d'ondulation, sur la base des résultats de ladite étape de détection de la caractéristique de fréquence.

9. Procédé de caractéristiques de fréquence de compensation selon la revendication 7 ou la revendication 8, dans lequel l'étape de détection de caractéristique de fréquence comprend les étapes de :
conversion de fréquence d'un signal OFDM compensé sur la base du signal d'oscillateur local ;
exécution de l'extraction d'un signal avec une largeur de fréquence prédéterminée à partir du signal converti en fréquence ;
exécution de la détection de niveau d'amplitude du signal exécuté ; et
balayage de la fréquence du signal d'oscillateur local afin de détecter la caractéristique de fréquence du niveau d'amplitude dans la bande de fréquence du signal OFDM.
